# EUROPEAN PATENT APPLICATION

(11) **EP 4 535 777 A2**
(43) Date of publication of application: **09.04.2025**
(21) Application number: 24204527.6
(22) Date of filing: 03.10.2024
(51) Int. Cl.: H04N 7/18, G06N 3/08, H04N 23/617, H04N 23/60, H04N 23/661

(54) **METHOD FOR IMPROVING A CONFIGURATION OF A CAMERA SYSTEM**

(30) Priority: 05.10.2023 GB 202315288
(71) Applicant: Milestone Systems A/S, 2605 Brøndby (DK)
(72) Inventor: NAVARRO, Fulgencio, 2605 Brøndby (DK)
(74) Representative: Canon Europe Limited

(57) **Abstract**

At least one embodiment of a method for determining the ability of a camera system to perform a task. The camera system comprises a camera connected via a communication network to a controller arranged to control the camera. The method comprises: identifying a task to be performed by the camera system; obtaining a first setting parameter of the camera; obtaining a second setting parameter of the communication network and/or the controller; and determining, as a function of the first and second setting parameters, a performance criterion of the camera system, wherein the performance criterion is indicative of how well the camera system will perform the identified task.

## Description

### FIELD OF THE DISCLOSURE

The present disclosure relates to settings for camera systems, for example distributed camera systems. In particular, the disclosure relates to a method and system for improving settings of a camera system, images of which are used to perform a particular task.

### BACKGROUND OF THE DISCLOSURE

Video surveillance is a fast-growing market tending to become increasingly widespread for ubiquitous applications. It can be used in numerous areas such as crime prevention, private and public areas for security purposes, abnormal event detection, traffic monitoring, customer behaviour, or general data gathering.

Each camera of a video surveillance system is typically assigned to a particular task, such as vehicle registration plate recognition, face recognition, or machine monitoring. Several cameras of different types (and/or cameras positioned at different locations) may be assigned to the same task. The cameras can be conducted by a user or may be automated, for example using a video content analysis (VCA) module.

In order to perform a particular task, it is important to select a type of camera which is best suited to the task and also to configure the selected camera so that it operates effectively. For example, the camera's setting parameters (e.g., aperture, shutter speed, gain, focal length, focus, depth-of-field, and white balance) may be configured to suit a particular task.

Providing a camera with inadequate setting parameter values can negatively impact the performance of the camera system and/or the VCA. However, configuring the camera (i.e., adjusting the values of the setting parameters) is time consuming. Also, such calibration typically involves a trade-off between the requirements associated with different tasks and/or operating conditions of the camera (e.g., different lighting conditions).

It is known to configure the camera within such surveillance systems with auto-setting technologies, which enable the camera setting parameter settings to be adjusted automatically to accommodate different operating conditions. For example, such auto-setting technologies may be configured to adjust a camera setting based on calibration of the camera (e.g., measurements made for every possible combination of parameters values). However, errors may occur during calibration, and external elements may change significantly over time when compared to elements observed at calibration time. Therefore, such solutions lead to predictions that are not robust enough as they are too dependent on calibration data.

These auto-setting technologies are generally embedded within the camera itself. Further, they do not take into account other parameters of the camera system. As a consequence, these auto-setting technologies can lead to the camera of a video surveillance system being configured incorrectly, which reduces its ability to perform the prescribed task.

Consequently, there is a need to improve the settings of a video surveillance system (i.e., a camera system), in particular the settings which are selected to enable the capturing of images for a particular task.

### SUMMARY OF THE DISCLOSURE

The present disclosure has been devised to address one or more of the foregoing problems.

In this context, there is provided a solution for determining one or more settings of a camera system for capturing images and/or video (e.g., for video surveillance) which is indicative of the performance of the camera system in achieving a particular task (e.g., as prescribed by a user, or client device).

According to a first aspect of the disclosure, there is provided a method for determining (e.g., analysing, assessing, or evaluating) the ability of a camera system to perform a task. The camera system comprises a camera connected via a communication network to a controller arranged to control the camera. The method comprises: identifying (e.g., selecting) a task to be performed by the camera system; obtaining a first setting parameter of the camera; obtaining a second setting parameter of the communication network and/or the controller; and determining, as a function of the first and second setting parameters, a performance criterion of the camera system, wherein the performance criterion is indicative of how well the camera system will perform the identified task

According to a second aspect of the disclosure, there is provided a method for training an algorithm to determine the ability of a camera system to perform a task, the method comprising: determining (e.g., defining) a task to be performed by the camera system; obtaining a reference algorithm; obtaining a plurality of images from a camera of the camera system, wherein the plurality of images are indicative of at least two different configurations of the camera system; obtaining a plurality of setting parameters for the at least two different configurations of the camera system; applying the reference algorithm to a first dataset, which comprises the plurality of images and setting parameters, to produce a ground-truth corresponding to the determined task; and applying a base algorithm to a second dataset, which comprises the ground-truth, the plurality of images, and the plurality of setting parameters, to produce a trained algorithm for determining a performance criterion of the camera system.

According to a third aspect of the disclosure, there is provided an apparatus for determining the ability of a camera system to perform a task, the camera system comprising a camera connected via a communication network to a controller arranged to control the camera, the apparatus comprising a processor configured to carry out the method steps of: identifying a task to be performed by the camera system; obtaining a first setting parameter of the camera; obtaining a second setting parameter of the communication network and/or the controller; and determining, as a function of the first and second setting parameters, a performance criterion of the camera system, wherein the performance criterion is indicative of how well the camera system will perform the identified task.

According to a fourth aspect of the disclosure, there is provided an apparatus for training an algorithm for determining how well a camera system will perform a task. The apparatus comprises a processor configured to carry out the method steps of: determining a task to be performed by the camera system; obtaining a reference algorithm; obtaining a plurality of images from a camera of the camera system, where the plurality of images are indicative of at least two different configurations of the camera system; obtaining a plurality of setting parameters for the at least two different configurations of the camera system; applying the reference algorithm to a first dataset, which comprises the plurality of images and setting parameters, to produce a ground-truth corresponding to the determined task; and applying a base algorithm to a second dataset, which comprises the ground-truth, the plurality of images, and the plurality of setting parameters, to produce a trained algorithm for determining a performance criterion of the camera system.

Known camera analytics systems and methods are unable to identify or determine the effects that the specific setup of a camera system (e.g., the environment and configuration of a camera system) will have on system's performance. For example, a known camera analytics method for people detection will yield different results when the camera system is evaluated in different environments.

The method according to present disclosure determines the performance criterion of a camera system as a function of the parameters corresponding to both the camera, and also the network/controller of the wider camera system. As such, the method is configured to consider different environmental conditions (e.g., different camera viewpoints, lighting conditions, distance to the target, available processing hardware, and network stability parameters) in order to provide a more accurate prediction of how the camera system (i.e., as a whole) will perform. This enables a user to understand how the characteristics of an environment will affect the performance of the camera system, and to decide whether to use the camera system in its present state, or take action deemed necessary (e.g., by reconfiguring the camera system to improve its performance) to achieve a given task.

Optional features of the disclosure are further defined in the dependent appended claims.

As described above, the first and third aspects may comprise identifying a task to be performed by the camera system. The task identification step may be achieved by receiving an input (e.g., from a user of the camera system) which identifies the task. For example, the user may identify (e.g., by selecting from a drop-down menu displayed on an input display apparatus) a task from a plurality of (pre-defined) tasks that the camera system is configured to perform. The identified task (and/or at least one of the plurality of pre-defined tasks) may be determined (e.g., prior to the method of the first and third aspects) by a training method and/or apparatus. For example, the second and fourth aspects may comprise determining a task (e.g., a new task) to be performed by the camera system. The task determination step may comprise receiving an input (e.g., from a user) which is indicative of a parameter (and/or threshold value) relating a particular situation that the camera system is to be configured to monitor. For example, the parameter may relate to a particular condition, or event, which can be used by the camera system to perform the newly defined task.

The camera system may include a processor for performing the method according to at least one, or each, of the first and second aspects of the disclosure. The processor may be included in any number of different components of the camera system, or in a separate entity which is configurable to be connected to the camera system. For example, the processor may be included in at least one (or each) of a camera, a controller, or another specific camera system element of the camera system.

At least one of the first and second setting parameters may be configurable as a function of the task to be performed based on images obtained from the camera. In this way, the images obtained from one or more cameras of the system may be used as inputs (e.g., to the method(s) of the first and second aspects).

The method may comprise determining, based on the performance criterion of the camera system, an indication of the expected performance of the camera system to perform the task.

The method may comprise determining an indication of a setting parameter of the camera system which is required to perform the task (e.g., a minimum or limiting requirement that is essential for the camera system to carry out the task).

The method may comprise displaying the indication to a user of the camera system, The expected performance may be provided as an output (e.g., a visual and/or audio signal) which is delivered to a user of the camera system, to indicate the system's ability to perform the task before the task is performed (e.g., before the user initiates the task and/or before the camera system is configured/installed).

In situations where the indication relates to a setting parameter, the indication may comprise an instruction to a user to configure the camera system to satisfy the setting parameter.

The method may comprise displaying the performance indication and/or the parameter indication to a user via a display apparatus of the camera system.

The method may comprise determining, based on the performance criterion of the camera system, a parameter control for configuring a component of the camera system to satisfy the setting parameter.

In embodiments, the method of the first and/or second aspects may further comprise configuring the camera system (e.g., at least one component of the camera system, such as a camera, the controller, and/or the communication network), based on the performance criterion. The apparatus of the third and/or fourth aspects may be configured to configure (e.g., adapt, modify) the camera system (e.g., at least one component of the camera system), based on the performance criterion. In this way, the methods and apparatuses of the present disclosure may be configured (e.g., directly modify or adjust the settings/operation of one more components of the camera system) to increase the ability of the camera system to perform one or more tasks.

The first parameter may comprise at least one of the following: a position of the camera; a camera type; a camera lens type; and an operating parameter of the camera.

Optionally, the operating parameter of the camera comprises at least one of: a gain value; a shutter speed value; an aperture size value; and an image encoding value.

The second parameter may comprise at least one of the following: a type of processor of the controller; a memory capacity of a memory device of the controller; and an operating parameter of the controller.

The second parameter may comprise at least one of the following: a type of router of the communication network; a position of a router of the communication network; and an operating parameter of a router of the communication network.

In embodiments, the plurality of setting parameters may comprise a first setting parameter of a camera of the camera system, and/or a second setting parameter of a communication network and/or a controller.

Optionally, the base algorithm is trained by a neural network. The base algorithm may be configured for deep learning.

According to a fifth aspect of the disclosure, there is provided a computer program product for a programmable apparatus. The computer program product may comprise instructions for carrying out each method step of the method according to any one of preceding paragraphs, when the program is loaded and executed by a programmable apparatus.

According to a sixth aspect of the disclosure, there is provided a non-transitory computer-readable storage medium storing instructions of a computer program for implementing the method according to any one of preceding paragraphs.

According to a seventh aspect of the disclosure, there is provided a camera system comprising a camera, a controller according to any one of preceding paragraphs, and a communication network for connecting the controller to the camera.

At least parts of the method according to the disclosure may be computer-implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal, or an electromagnetic signal, e.g., a microwave or RF signal.

### BRIEF DESCRIPTION OF THE DRAWINGS

Other features and advantages of the disclosure will become apparent from the following description of non-limiting exemplary embodiments, with reference to the appended drawings, in which:
- **Figure 1** schematically illustrates an example of a camera system wherein embodiments of the disclosure may be implemented;
- **Figure 2** is a schematic block diagram of a computing device for implementing embodiments of the disclosure;
- **Figure 3** is a block diagram illustrating the steps of a method according to an embodiment of the disclosure for determining a setting parameter of the camera system for performing a task;
- **Figure 4** is a block diagram illustrating the operation of an analysis module of the camera system;
- **Figure 5** is a block diagram of a method for training an algorithm to be implemented by the analysis module of the camera system; and
- **Figure 6** is a block diagram illustrating the steps of the training method of Figure 5.

### DETAILED DESCRIPTION OF EMBODIMENTS OF THE DISCLOSURE

A typical camera system comprises a camera connected via a communication means (e.g., wired or wireless network) to a control means (e.g., computing device). According to particular embodiments, the performance of a configuration of a camera system may be understood by determining a parameter of the camera and a further parameter of the communication means and/or the control means (i.e., the current parameters of the camera system). The configuration of the camera system may be adapted to suit a particular scenario based on the determined parameters. To that end, a method is described for determining a target parameter of a component of the camera system which increases the ability of the camera system to perform a particular task. According to further embodiments, a method is described for training an algorithm to determine the target parameter based on a plurality of inputs.

For the sake of illustration, the following examples are directed to setting a camera in a camera system. However, embodiments of the disclosure are not limited to this context.

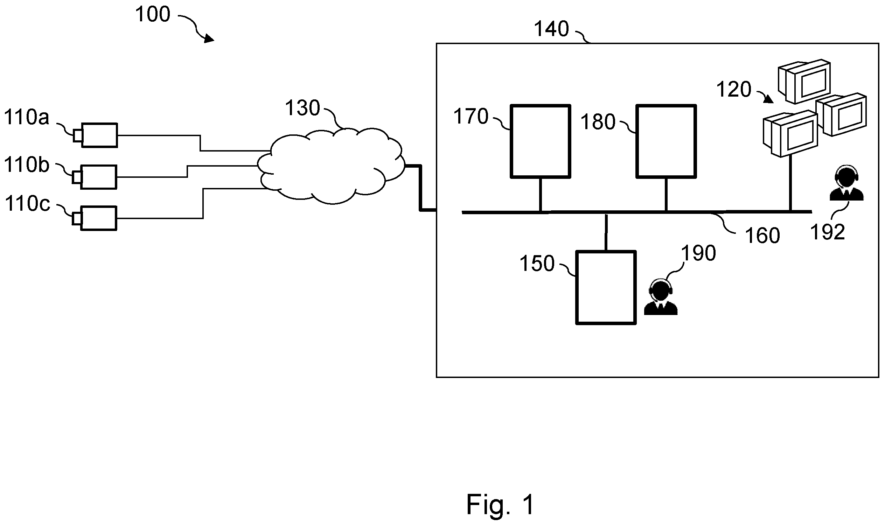

**Figure 1** schematically illustrates an example of a camera system (e.g., a video surveillance system) wherein embodiments of the disclosure may be implemented.

Camera system 100 includes a plurality of cameras denoted 110a, 110b, and 110c, for example network video-cameras of the Internet Protocol (IP) type, generically referred to as IP cameras 110. The cameras, also referred to as source devices, able to provide image/video data from a scene. Particularly, a video camera, or camera in-short, is a video source device.

The cameras 110 are connected to a control means (e.g., a controller) 140 via a communication means 130 (e.g., a network device). The communication network 130 may comprise wired and/or wireless connections between the cameras 110 and the control means 140. In larger camera systems, the communication network 130 may comprise a wide area network (WAN), such as the Internet, which connects the cameras 110 to the control means 140.

According to the illustrated example, the controller 140 comprises a management module 150 configured to output control signals to control aspects (e.g., components or elements) of the camera system 100 (e.g., the cameras 110 and/or a processor of the controller 140), a recording module 170 to store the received video streams from the cameras, and a set of displays 120 configured to display received video streams.

The controller 140 further comprises an analysis module 180 which is configured to analyse one or more inputs received from different components of the camera system 100. For example, the analysis module may include a video analysis module which receives and analyses the video streams from the cameras 110. Further inputs received by the analysis module 180 include information relating to the configurable parameters of the various components of the camera system 100, as will be described in more detail below.

At least one, or each, of the modules 150, 170 and 180 are provided as a computer server (or part of a computer server). The modules are interconnected via a dedicated infrastructure network 160, as shown in Fig. 1. The network 160 is typically a local area network (LAN) comprising wired and/or wireless network components, for example a local area network based on Gigabit Ethernet.

The set of displays 120 may be used by an operator (e.g., a human operator 192) to monitor the video streams corresponding to the scenes shot by the video-cameras 110 of the camera system 100. Alternatively, or additionally, the video streams may be received by a client device, such as a video content analysis (VCA) module.

The management module 150 may be a device containing a software module that makes it possible to configure, control, and manage the camera system 100 (e.g., the cameras 110, the network 130, and controller 140), by providing inputs to an administration interface which is operated by the management module 150. Such tasks can be carried out by an administrator 190 (e.g., a human administrator who is arranged to configure the overall camera system 110). For example, the management module 150 may receive from the administrator one or more inputs (e.g., command/control inputs) which correspond to the configurable parameters of the camera system. In addition, the management module 150 is configured to receive inputs from the auto-setting module 160 for controlling aspects of the camera system 100.

The management module 150 is arranged to output control signals to the relevant aspects of the camera system based on the received inputs in order to configure camera system to perform a prescribed task. In this way, the controller 140 is capable of directly configuring aspects of the camera system 100 (e.g., the cameras 110 and/or components of the control means 140 and communication network 130). In addition, the management module 150 is arranged to output control signals to the displays 120 to display instructions to the administrator 190 to adjust one or more aspects of the camera system 100. For example, the administrator may be presented with an instruction to adjust the position of a camera 110, or to replace or reconfigure (e.g., upgrade) a component of the controller 140, and/or communication network 130.

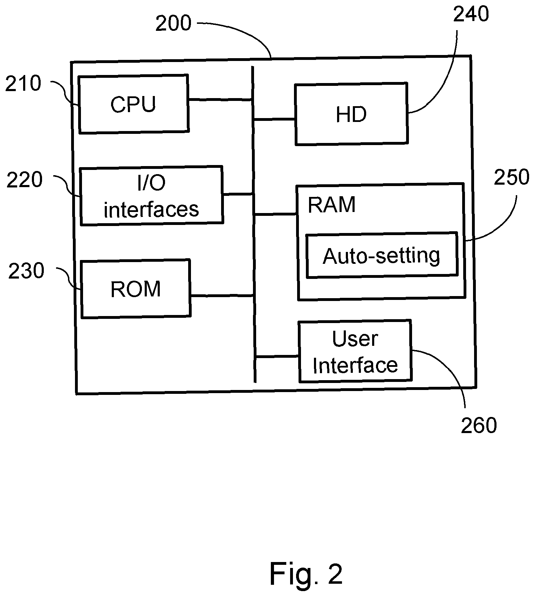

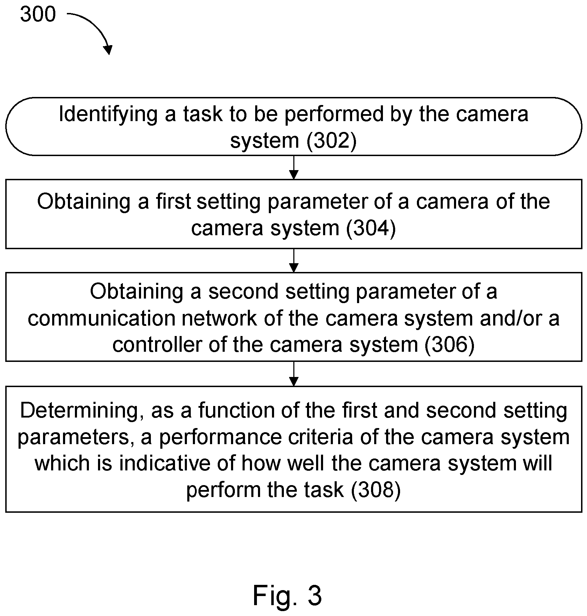

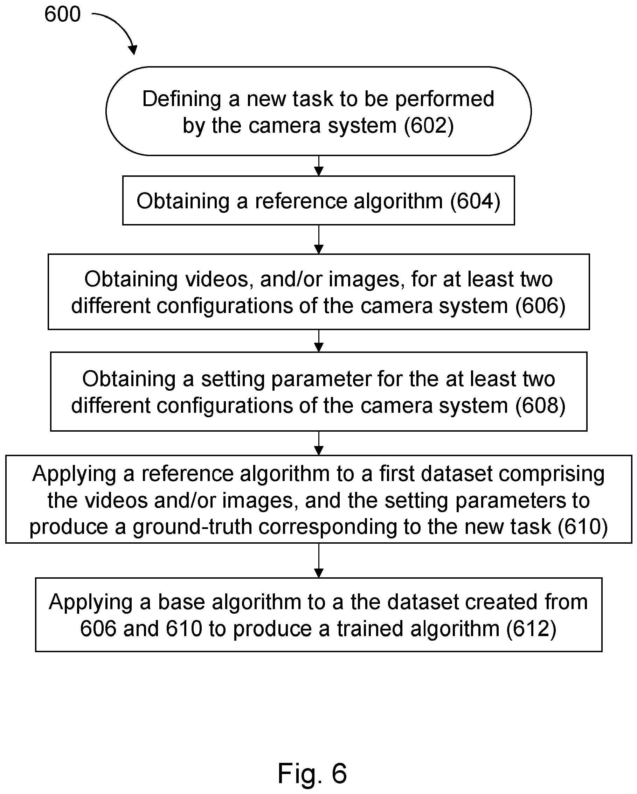

**Figure 2** is a schematic block diagram of a computing device (for example comprising a memory and a processing means (e.g., a processor) for implementing embodiments of the disclosure. It may be embedded in the management module 150 or in the analysis module 160 described with reference to Figure 1. The computing device may be used to carry out the method steps described by reference to Figures 3 and 6. In embodiments the computing device may comprise a graphics processing Unit (GPU), as would be readily understood by the skilled person.

The computing device 200 comprises a communication bus connected to:
- a central processing unit (CPU) 210, such as a microprocessor;
- an I/O module 220 for receiving data from and sending data to external devices. In particular, it may be used to retrieve images from source devices;
- a read only memory 230, denoted ROM, for storing computer programs for implementing embodiments;
- a hard disk 240 denoted HD;
- a random-access memory 250, denoted RAM, for storing the executable code of the method of embodiments of the disclosure, in particular an auto-setting algorithm, as well as registers adapted to record variables and parameters; and
- a user interface 260, used to configure input parameters of embodiments of the disclosure. As mentioned above, an administration user interface may be used by an administrator of the video surveillance system.

The executable code may be stored either in random access memory 250, in hard disk 240, or in a removable digital medium (not represented) such as a disk of a memory card.

The central processing unit 210 is adapted to control and direct the execution of the instructions or portions of software code of the program or programs according to particular embodiments of the disclosure, which instructions are stored in one of the aforementioned storage means. After powering on, CPU 210 may execute instructions from main RAM memory 250 relating to a software application after those instructions have been loaded, for example, from the program ROM 230 or hard disk 240.

**Figure 3** is a block diagram illustrating exemplary method steps of a method 300 according to an embodiment of the disclosure.

As illustrated, a first method step 302 involves identifying a task to be performed by the camera system. A user can determine the task by inputting a command to the camera system (e.g., via a human machine interface). For example, the user may select a task from a list of available options using a touchscreen interface. Alternatively, the camera system may be pre-programmed with a particular task, for example which can then be identified from a storage means of the controller.

The task may include at least one of the following: real time VCA, for example intruder detection, human counting and/or identification (e.g., via facial recognition), fall detection (e.g., in a hospital or care facility); business intelligence VCA, for example people or object trajectories analysis, heatmapping, demographics analysis; and forensic VCA, for example people search based on visual aspect, demographics or ethnicity. Further, the task may define a general task which includes any combination of these specific tasks.

In a second method step 304, a first setting parameter which relates to at least one of the cameras 110 is obtained (e.g., a value of the at least one setting parameter). The first setting parameter (also referred to as a camera setting parameter) corresponds to a fixed and/or a variable attribute of at least one of the cameras 110.

The camera setting parameter includes configurable attributes of the camera that can be set through a camera application programming interface (API), also referred to as operating parameters. Examples of such camera setting parameters are gain, shutter, iris (e.g., aperture) and image encoding etc. In practical discussions of digital cameras and scanning devices, gain is described as a means of increasing the ISO of the device and apparent sensitivity to light. In more technical terms, gain in a digital imaging device represents the relationship between the number of electrons acquired on an image sensor and the analog-to-digital units (ADUs) that are generated, representing the image signal. Increasing the gain amplifies the signal by increasing the ratio of ADUs to electrons acquired on the sensor. The result is that increasing gain increases the apparent brightness of an image at a given exposure. The camera setting parameters may depend on the type of camera. For instance, not all cameras allow controlling values of gain, shutter, and iris. And even for cameras that do, it may be decided to use a fixed value for one parameter (e.g., iris) and to use the method to control the values of other parameters (e.g., gain and shutter).

The camera setting parameter may relate to a configurable attribute of the camera which cannot be adjusted by the camera API but can be configured by the operator 192. For example, the positioning (e.g., height, orientation, and location) of the camera within a given environment can be configured. Alternatively, the lens of a camera may be replaced (e.g., a wide-angle lens may be replaced with a fish-eye lens).

The camera setting parameter may be determined based on information that is received from each camera directly. Camera setting parameters which can be controlled (e.g., dynamically) by the camera API may be received in this way, since it allows the analysis module to determine the current configuration of the camera in real time. Camera setting parameters may also be stored on a storage medium of the camera system, for example, on the memory of the computing device 200.

Alternatively, or additionally, the camera setting parameters may be determined by analysing the image characteristics of an image obtained from the camera (e.g., image contrast, noise, and motion blur etc.). An image characteristic is a property of an image that can be measured with a metric. Corresponding measurement makes it possible to assess the satisfaction level. In the following specification, an image characteristic may also be called a criterion. For instance, contrast is a criterion/image characteristic for image quality corresponding to a good balance between dark / bright areas in an image. Other examples are noise, motion blur, iris blur, encoding artefacts and bandwidth.

In a third step 306, a second setting parameter is obtained which relates to a component of the communication network 130 and/or the controller 140. The second setting parameter (also referred to as a system setting parameter) corresponds to a fixed and/or a variable attribute of the relevant component(s) of the camera system 100 that supports the cameras 110. For example, the second setting parameter may relate to a performance characteristic of a component (e.g., processor) of the controller 140.

A setting parameter relating to the controller 140 (e.g., a controller setting parameters) can include those attributes which may be set by a computer API, also referred to as an operating parameter. Such parameters may include a processor speed or processor fan speed etc. The controller setting parameter may also include fixed attributes of the controller (i.e., attributes that cannot be controlled by the computer API), such as maximum processor speed, memory capacity etc. Such controller setting parameters can be configured by the operator, for example, by replacing the relevant component of the controller (e.g., replacing a fan module).

The setting parameters relating to the network 130 (e.g., a network setting parameter) include those attributes which may be set by a network controller API, also referred to as an operating parameter. For example, a wireless node (e.g., router) of the network 130 may be configured to operate within a different frequency band. Alternatively, or additionally, a wireless node may be switched from a standby mode to an active mode in order to transmit data across the network. The network setting parameter may also include fixed attributes of the network (i.e., attributes that cannot be controlled by the API). For example, the network may include a plurality of wireless nodes which can transmit and receive data over particular frequencies. By replacing, and/or repositioning, one or more nodes in the wireless network, the operator may alter the flow of data between the cameras 110 and the controller 140.

It will be appreciated that the second and third method steps 304, 306 may occur sequentially as shown in Figure 3. Alternatively, these method steps may occur in a reverse order or simultaneously, without diverting form the scope of the present disclosure.

A fourth method step 308 involved determining, as a function of the first and second setting parameters, a performance criterion of the camera system 100. The performance criterion is indicative of how well the camera system 100 will perform the identified task. Accordingly, the method considers the parameters of both the camera 110 and the communication network 130 and/or the controller 140 of the camera system 100. In so doing, the method increases the number of possible routes to improving the performance of the system 100 in order to achieve the identified task.

The user may be provided with an indication as to whether or not (and/or to what extent) the camera system 100 is able to perform the identified task. According to particular embodiments, the indication is displayed on the displays 120 (e.g., using a graphical user interface). In this way, the method provides the user with an indication of how well the camera system is configured to perform the task based on the first and second setting parameters. The first and second setting parameters correspond to fixed and/or variable attributes of the respective components of the camera system. Accordingly, the method can also automatically (i.e., directly) configure the components of the camera system to optimize their performance with respect to achieving the task. The method can also provide information which enables the user to modify the system to increase its performance.

It is noted that the method described by reference to Figure 3 may be generalized and applied to several different tasks. For example, the user interface may allow the user to associate different tasks to individual cameras 110 (and/or groups of cameras) of the camera system 100. By doing so, some advanced users may have the benefit of selecting a specific camera for a particular task, or to configure the cameras to perform separate tasks, simultaneously.

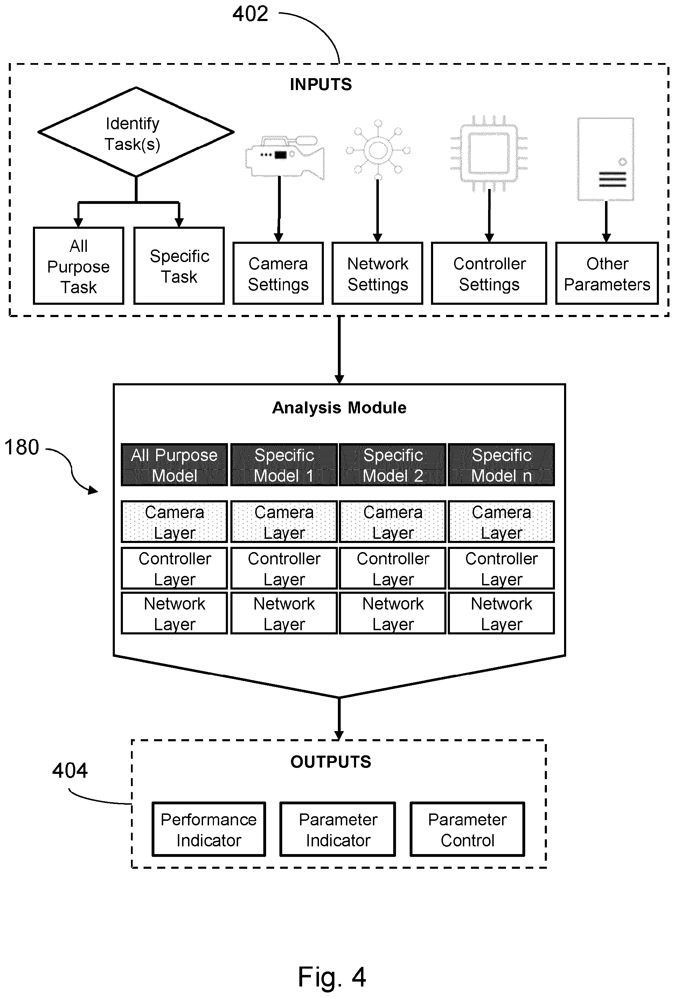

According to embodiments of the present disclosure, the method 300 of Figure 3 is carried out by the analysis module 180 of the controller 140, as will now be described with reference to **Figure 4****.**

The method 300 includes method steps 302, 304, and 306 in which the analysis module 180 obtains a plurality of inputs 402 (see Figure 4). The analysis module 180 then applies to the inputs 402, in method step 308, to determine a performance criterion of the camera system 100 which is indicative of how well the system will perform a specific task.

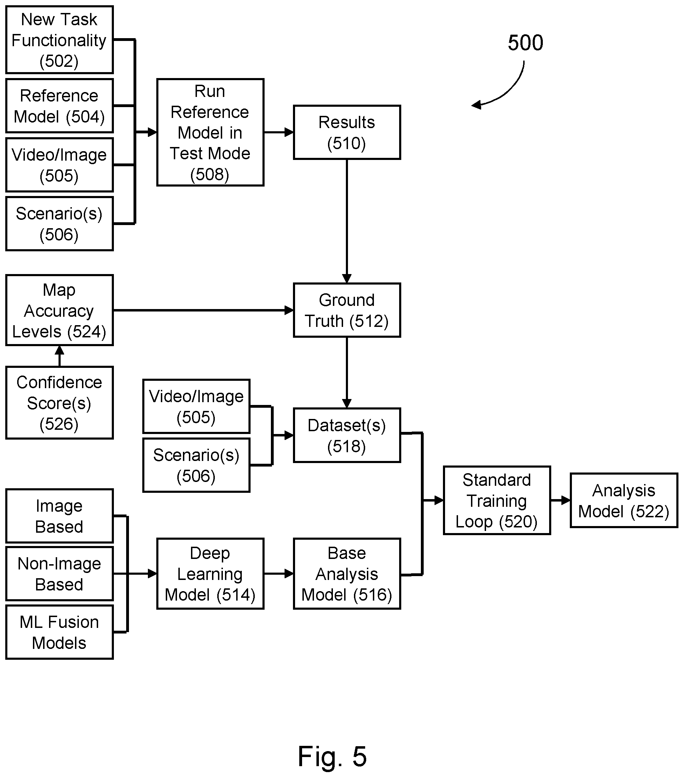

The inputs 402 include a "task input" relating to a at least one of a plurality of tasks that can be carried out by the camera system 100. As described above, the identified tasks may be specific (e.g., facial recognition or fall detection) or general (e.g., a combination of multiple tasks). In embodiments, the task may be identified by a user from a plurality of predefined tasks (e.g., the task may be selected from a list of available options displayed by the system). For example, a user may select a suitable task from a drop-down menu presented on a display. The identified task may be determined (e.g., generated prior to being selected by the user) by a method (e.g., a training method) according to an aspect of the present disclosure. Such a method is described below in relation to Figs. 5 and 6.

The inputs 402 also include a "setting input" indicative of at least one setting parameter corresponding to the cameras 110, the network 130, and/or the controller 140. In addition, the inputs 402 may include an "environment input" which is indicative of other parameters, such as weather or lighting conditions etc.

The plurality of setting parameters (e.g., camera, network and/or controller) are used to analyse the environment in which the tasks will be carried out by the camera system 100. To perform the analysis, firstly the received setting parameters are combined to define a "Scenario". The setting parameters of each "Scenario" are then fed into an analysis model (or algorithm), such as a quality assurance analytics model, which is configured to output a series of outputs 404, as will be described in more detail below.

The outputs 404 include at least one of a performance indicator, a parameter indicator, and a control signal. The performance indicator defines the expected performance of the camera system 100 to achieve the identified task(s). The performance indicator may be communicated to the user, e.g., via the displays 120, in the form a rating (e.g., a scale of 1 to 5 (or 0% to 100%), where 1 represents a poor performance and 5 represents a good performance by the camera system). The parameter indicator comprises an indication of a setting parameter of the camera system 100 which is required to perform the task.

The parameter indicator may comprise a user instruction which provides directions to an operator to manually configure (e.g., adjust) an attribute of the camera system 100 in order to satisfy the required parameter. The performance indicator and/or parameter indicator may be presented on a display 120 in the form of text and/or graphical information. At least one, or each, of the performance indicator and the parameter indicator may be outputted as a command signal to a display controller which then controls the display 120 to present the relevant information to the operator of the camera system 100. Other types of user interface may be used to transmit the performance/parameter indication information, without departing from the scope of the present disclosure.

The output 404 may further comprise a parameter control (e.g., a control signal) which is configured to adjust a controllable attribute of a component of the camera system 100 (e.g., the cameras 110, the network 130, and/or the controller 140). For example, the parameter control may include a command to increase the gain of the camera 110 by a particular value. The parameter control is output to the management module 150 of the controller 140, which then determines a control signal to be outputted to the camera 110 to affect the required gain increase.

At least one, or each, of the outputs 404 may be accompanied by information which is presented to the user (e.g.., via the display 120) to explain the purpose of the output. For example, a parameter indicator configured to adjust the processing speed of a processor of the controller 140 may be accompanied by a message which describes why the adjustment in the parameter of the controller 140 is required to improve the performance of the system to achieve the identified task.

At least one, or each, of the outputs 404 can include information relating to specific components and/or setting parameters of the camera system 100. For example, the performance indicator may include a first rating (e.g., 5) related to a camera 110a of the camera system 100 which indicates that the camera 110a is well suited to perform a particular task (e.g., fall detection). The performance indicator may also include a second rating (e.g., 1) for a network component (e.g., wireless router) of the network 130 which indicates that the network is poorly configured to transmit data between the camera 110a and controller 140, such that the system is unable to perform the task in a satisfactory manner. Similarly, the analysis module 180 may produce separate parameter indicators and/or controls relating to specific components of the camera system 100.

As is shown in Figure 4, the analysis module 180 is configured with several analysis models including an all-purpose model, and several specific models. Each of the specific models may be directed towards analysing the input parameters for a particular task. The all-purpose model may be configured to analyse the performance of the system for two or more tasks (e.g., which are required to run sequentially or synchronously on the camera system). Each analysis model can determine the performance of the system based on setting parameters which relate to each of the camera, network and controller components of the camera system 100. At least one, or each, of the analysis models include a neural network (e.g., an Artificial Intelligence (Al) algorithm) to perform the analysis of the camera system 100 (e.g., to produce the outputs 404).

The analysis model will be a machine learning model. For simplicity, a machine learning model is described which uses neural networks, but other machine learning models can be used without diverging from the scope of the present disclosure,

Input processing: A neural network can be defined as a complex web of interconnected neurons that emulate the human brain's information processing. When input parameters 402 are fed into the model 180, they are encoded and disseminated through the layers of neurons. Each neuron computes a weighted sum of its inputs, followed by the application of an activation function. The intermediate values capture the input's nuanced features and interactions.

Feature Learning and Prediction: As input parameters 402 traverse the network, they progressively transform into higher-level abstractions. The network learns intricate patterns, recognizing relevant features through a hierarchical process. These features encompass both evident and latent relationships within the data. The network's depth allows it to capture complex dependencies that simpler models can overlook.

Performance indicator: The analysis model 180 evaluates the inputs 402 against the learned patterns within its training data, and uses the results of this evaluation to map settings/scenarios to results as shown in Fig. 5. This dynamic computation results in a predicted accuracy value. This value encapsulates the model's estimation of its performance on the given task, considering the intricate relationships and hierarchical features captured by the analysis model's architecture.

Parameter indicator: The analysis model 180 identifies the most relevant element(s) in the system that contributes to the predicted accuracy. The element(s) represent the category (e.g., the cameras 110, the network 130, and/or the controller 140) that the model assigns to the input data, based on its learning from the training dataset. Additionally, the analysis model 180 may provide a potential value associated with the identified category. This value signifies a suggested adjustment that may increases the expected accuracy of the VCA for the specific task. Implementing this adjustment can lead to a higher predicted accuracy.

Parameter control: The above-described categories (e.g., the cameras 110, the network 130, and/or the controller 140) are mapped to different signals that will enable settings (i.e., corresponding to each of the different signals) to be controlled and/or adjusted following the suggested adjustments.

According to embodiments of the disclosure, the method(s) described above with reference to Figures 3 and 4 may be carried out by an analysis model (or algorithm) which is trained according to a (training) method 500, which will now be described with reference to **Figure 5** and **Figure 6****.**

The training method 500 may be undertaken by the controller 140 of the camera system 100 or in a separate computer, as would be understood by the skilled person. In general, the training method 500 comprises two main steps, namely the generation of a training dataset and the training of an analysis model (e.g., an Al algorithm) based on the training dataset.

The method starts with method step 602, which involves determining (e.g., defining) a "new" task (e.g., functionality) 502 to be performed by the camera system. The new task 502 may be inputted into the camera system 100 by a user of the system. In embodiments, the "new" task 502 is defined by the user (e.g., such as during the training method 500 of Fig. 5). According to such embodiments, the method step 602 may include a user inputting one or more parameters into the system. The parameters may relate to the purpose and function of the new task. For example, the user may define a measurable parameter, and/or a threshold value relating to the measurable parameter, which can be used by the system to determine whether a condition of the new task has been achieved.

The new task 502 may be a fall detection task (e.g., of a patient in a hospital environment). The fall detection task may include information of how the task is defined, in this case how a patient fall is detected. For example, a standing person may be characterized by a first bounding box which has a width that is less (i.e., narrower) than its height, whereas a person who has fallen to the ground may have a second bounding box that has a width which is greater (e.g., wider) than its height. A fall may be detected by monitoring the transition from the first bounding box to the second bounding box. Accordingly, the method includes receiving (e.g., from the user) a set of minimum requirements of a video source for use in the fall detection task (e.g., the minimum characteristics of the video source that would enable a motion capture analysis tool to detect that a patient has fallen).

A second method step 604 involves obtaining a reference model 504, which is an analysis model that capable of undertaking the new task 502.

In a third method step 606, video streams and/or images 505 are obtained for at least two different configurations of the camera system 100. The different configurations of the camera system correspond to different arrangements of the components of the camera system (e.g., including the camera 100, network 130, and controller 140 components, as described above). In this way, the different configurations represent a camera system which is configured with different setting parameters (or which is arranged in a different environmental condition).

A fourth method step 608 comprises obtaining the setting parameters (as represented by the "Scenario(s)" 506 shown in the block diagram of Figure 5) corresponding to each of the different configurations of the camera system 100. As such, the setting parameters are obtained for each for the respective video/images obtained in method step 606.

In a fifth method step 610, the reference model 504 is run in a test mode 508 for each of the different scenarios 506. In this way, the reference model 504 provides reference results depending on the setting parameters of the setting parameters for each of the different configurations of the camera system 100 (i.e., for different scenarios and obtained images). These results are used as the basis on which a "new" model (e.g., base model 516 as will described below with reference to Fig. 5) will learn how the different setting parameters affect the camera system's ability to perform the new task 502 (e.g., which combination of setting parameters produces good and/or bad results).

The results 510 obtained from testing the reference model 504 are mapped onto a score map. The setting parameter values and videos/images of define the data sources of the score map, and the results are mapped onto the score map to define a ground-truth 512. The ground truth 512 is determined with reference to a map of accuracy levels 524 which includes a set of predetermined confidence scores 526Thi, as outlined below:
- True Positive (TP) - HIGH CONFIDENCE = HIGH SCORE
- TP -LOW CONFIDENCE = MID-HIGH SCORE
- False Positive (FP) - LOW CONFIDENCE = MID-HIGH SCORE
- FP - HIGH CONFIDENCE = LOW SCORE
- True Negative (TN) - HIGH CONFIDENCE = HIGH SCORE

It will be appreciated that the above-described mapping procedure is merely an example of a simplified arrangement of the present disclosure. For example, in embodiments the results can be mapped to a much more granular map of outputs.

Accordingly, each of the different configurations of the camera system (e.g., as defined by the scenarios) is given a score that is defined by the ground-truth 512.

In a subsequent method step 612, a training loop 520 is launched for a base model 516 using the videos and/or images 505, the scenarios 506, and the ground truth 512 as inputs (i.e., the datasets 518 as shown in Figure 5). In particular, the loss functions of the training loop 520 are guided by the scores provided in the ground-truth 512.

As a result, the base model 516 will learn which combinations of parameters and videos/images produce good or bad results for the reference model 504. From that point, when the base model 516 (i.e., which is now trained and integrated as part of the analysis module 180) will be able to predict in a specific camera system 100 the good or bad results for models which are similar to the reference model when performing the identified task 502.

Accordingly, the completion of the training loop 520 results in a trained analysis model 522 (i.e., a trained base model 516) which is added to the analysis module 180, which can then be used by the camera system 100 to perform method 300 (as described above with reference to Figures 3 and 4).

The base model 516 is based on a neural network architecture (e.g., an artificial intelligence (Al) model). The neural network may be configured for deep learning (e.g., a deep learning model 514), which for example uses images/videos as inputs. Additionally, the neural network may be configured to use non-image-based inputs. In that case, results of both models will be fused using machine learning fusion models.

The non-image Al model will map parameters and results from the reference model without taking into account image-based information, for example, the non-image model can learn that when the processor setting is define to very low resources the results of the reference model are worse if the application requires real time processing.

The base model 516 may employ a machine leaning (ML) based algorithm, for example a fusion ML algorithm. In embodiments, such an ML fusion model enables the training of an analysis model which combines both image and non-image based models, together with the datasets (e.g., the videos and/or images, and the scenarios for the different camera system configurations).

According to the above exemplary method 600, an analysis model 522 is obtained which is compatible with a particular camera system 100, and which makes it possible to analyse the ability of the camera system 100 to perform a plurality of different identified tasks 502 (e.g., fall detection).

In embodiments, the training method 600 produces a single model for the new task defined in 502. There is only one analysis model 522 per identified task 502. As a result of the training method 622, the model 522 will have learnt to generate performance indicators for the fall detection task relating to any combination of parameter settings of a camera system 100.

Accordingly, the analysis module 180 may be configured to operate a number of analysis models 522 relating to different identified tasks (e.g., a separate analysis model for each identified task). Each analysis model 522 may be directed towards analysing different combinations of setting parameters. For example, the setting parameters of a first model may be directed towards the gain and the shutter speed whilst the setting parameters of a second model may be related to the gain, the shutter speed, and the aperture of the camera system 100.

While the disclosure has been illustrated and described in detail in the drawings and foregoing description, such illustration and description are to be considered illustrative or exemplary and not restrictive, the disclosure being not restricted to the disclosed embodiment(s). Other variations on the disclosed embodiment can be understood and performed by those skilled in the art, in carrying out the claimed disclosure, from a study of the drawings, the disclosure and the appended claims. Such variations may derive, in particular, from combining embodiments as set forth in the summary of the disclosure and/or in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the disclosure.

In the preceding embodiments (i.e., exemplary arrangements), the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave may be included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

## Claims

1. A method for determining how well a camera system will perform a task, the camera system comprising a camera connected via a communication network to a controller arranged to control the camera, the method comprises:
identifying a task to be performed by the camera system;
obtaining a first setting parameter of the camera;
obtaining a second setting parameter of the communication network and/or the controller; and
determining, as a function of the first and second setting parameters, a performance criterion of the camera system, wherein the performance criterion is indicative of how well the camera system will perform the identified task.

2. A method according to claim 1, wherein at least one of the first and second setting parameters is configurable as a function of the task to be performed based on images obtained from the camera.

3. A method according to claim 1 or claim 2, wherein the method comprises determining, based on the performance criterion of the camera system, an indication of the expected performance of the camera system to perform the task, and/or an indication of a setting parameter of the camera system which is required to perform the task.

4. A method according to claim 3, wherein the method comprises displaying the indication to a user of the camera system, the indication comprises an instruction to a user to configure the camera system to satisfy the setting parameter.

5. A method according to claim 3 or claim 4, wherein the method comprises displaying the performance indication and/or the parameter indication to a user via a display apparatus of the camera system.

6. A method according to any one of claims 1 to 5, wherein the method comprises determining, based on the performance criterion of the camera system, a parameter control for configuring a component of the camera system to satisfy the setting parameter.

7. A method according to any one of the preceding claims, wherein the first parameter comprises at least one of the following:
a position of the camera;
a camera type;
a camera lens type;
an operating parameter of the camera.
a gain value;
a shutter speed value;
an aperture size value; and
an image encoding value.

8. A method according to any one of the preceding claims, wherein the second parameter comprises at least one of the following:
a type of processor of the controller;
a memory capacity of a memory device of the controller;
an operating parameter of the controller
a type of router of the communication network;
a position of a router of the communication network; and
an operating parameter of a router of the communication network.

9. A method of training an algorithm for determining how well a camera system will perform a task, the method comprising:
identifying a task to be performed by the camera system;
obtaining a reference algorithm;
obtaining a plurality of images from a camera of the camera system, wherein the plurality of images are indicative of at least two different configurations of the camera system;
obtaining a plurality of setting parameters for the at least two different configurations of the camera system;
applying the reference algorithm to a first dataset, which comprises the plurality of images and setting parameters, to produce a ground-truth corresponding to the identified task; and
applying a base algorithm to a second dataset, which comprises the ground-truth, the plurality of images, and the plurality of setting parameters, to produce a trained algorithm for determining a performance criterion of the camera system.

10. A method according to claim 9, wherein the plurality of setting parameters comprise a first setting parameter of a camera of the camera system, and/or a second setting parameter of a communication network and/or a controller.

11. A method according to claim 9 or claim 10, wherein the base algorithm is trained by a neural network, and wherein the algorithm is configured for deep learning.

12. A non-transitory computer-readable storage medium for storing instructions of a computer program for implementing the method according to any one of claims 1 to 11.

13. An apparatus for determining an ability of a camera system to perform a task, the camera system comprising a camera connected via a communication network to a controller arranged to control the camera, the apparatus comprising a processor configured to carry out the method steps of:
identifying a task to be performed by the camera system;
obtaining a first setting parameter of the camera;
obtaining a second setting parameter of the communication network and/or the controller; and
determining, as a function of the first and second setting parameters, a performance criterion of the camera system, wherein the performance criterion is indicative of how well the camera system will perform the identified task.

14. A camera system comprising a camera, a controller according to claim 13, and a communication network for connecting the controller to the camera.

15. An apparatus for training an algorithm for determining how well a camera system will perform a task, the apparatus comprising a processor configured to carry out the method steps of:
determining a task to be performed by the camera system;
obtaining a reference algorithm;
obtaining a plurality of images from a camera of the camera system, wherein the plurality of images are indicative of at least two different configurations of the camera system;
obtaining a plurality of setting parameters for the at least two different configurations of the camera system;
applying the reference algorithm to a first dataset, which comprises the plurality of images and setting parameters, to produce a ground-truth corresponding to the determined task; and
applying a base algorithm to a second dataset, which comprises the ground-truth, the plurality of images, and the plurality of setting parameters, to produce a trained algorithm for determining a performance criterion of the camera system.
